(19) Europäisches Patentamt
European Patent Office
Office européen des brevets

(11) **EP 1 744 164 A2**

(12) **EUROPÄISCHE PATENTANMELDUNG**

(43) Veröffentlichungstag:
**17.01.2007   Patentblatt 2007/03**

(51) Int Cl.:
***G01P 3/48*** (2006.01)

(21) Anmeldenummer: **06008998.4**

(22) Anmeldetag: **29.04.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **15.07.2005   DE 202005011333 U**

(71) Anmelder: **Brose Fahrzeugteile GmbH & Co. KG, Coburg**
**96450 Coburg (DE)**

(72) Erfinder: **Kalb, Roland**
**96269 Rossach (DE)**

(74) Vertreter: **Tergau & Pohl Patentanwälte**
**Mögeldorfer Hauptstrasse 51**
**90482 Nürnberg (DE)**

(54) **Verstellsystem eines Kraftfahrzeugs mit Mitteln zur Bestimmung einer Geschwindigkeit aus der Welligkeit des Antriebsstromes**

(57)   Verstellsystem eines Kraftfahrzeugs, mit
- einem mechanisch kommutierten Antriebsmotor (20) und
- einer Steuerungsvorrichtung (100),
bei dem
- die Steuerungsvorrichtung (100) Mittel (120,140) zur Messung der Geschwindigkeit bzw. Position einer durch aus die mechanische Kommutierung bedingten Welligkeit eines Antriebsstromes durch den mechanisch kommutierten Antriebsmotor (20) aufweist,

- die Steuerungsvorrichtung (100) zur Steuerung des Antriebsmotors (20) in Abhängigkeit von der gemessenen Welligkeit ausgebildet ist, und
- Nuten (413) eines Läufers (4') des mechanisch kommutierten Antriebsmotors (20) geschränkt sind.
Die Spulen des Motors können einen Wickelschritt W aufweisen, welcher zur Anzahl N der Nuten folgendes verhältnis aufweist: W=(N/2)-2.
Der Motor kann Windungen mit unterschiedlichem Wickelschritt aufweisen.

FIG 2

Abwicklung 360°

EP 1 744 164 A2

FIG 4

**Beschreibung**

Die Erfindung betrifft ein Verstellsystem eines Kraftfahrzeugs.

Verstellsysteme in Kraftfahrzeugen werden benötigt, um beispielsweise eine Sitzwanne oder eine Fensterscheibe eines Kraftfahrzeugs in der Position zu verstellen. Verfahren zur Steuerung eines Verstellsystems mit einem mechanisch kommutierten Gleichstrommotor sind bspw. aus der EP 0 689 054 A1, EP 0 730 156 A1 sowie der DE 39 35 585 A1 bekannt.

Ein Wechselanteil des Stromes von Gleichstrommotoren, der auch als Welligkeit (englisch Ripple) bezeichnet wird, kann zur Bestimmung einer Drehposition oder einer Drehzahl des Motors erfasst und ausgewertet werden. In der DE 35 27 906 A1 wird beispielsweise ein so genanntes Nulldurchgangsverfahren beschrieben, bei dem nach Elimination des Gleichanteils die Nulldurchgänge des Stromes erfasst werden.

Der Erfindung liegt die Aufgabe zu Grunde ein Verstellsystem eines Kraftfahrzeugs unter Auswertung des Antriebsstromes weiter zu entwickeln.

Diese Aufgabe wird durch ein Verstellsystem mit den Merkmalen der unabhängigen Ansprüche gelöst. Vorteilhafte Weiterbildungen sind Gegenstand von Unteransprüchen.

Demzufolge ist ein Verstellsystem eines Kraftfahrzeugs mit einem mechanisch kommutierten Antriebsmotor und einer Steuerungsvorrichtung vorgesehen. Ein mechanisch kommutierter Antriebsmotor weist vorzugsweise einen Kommutator mit Kommutatorlamellen auf, auf denen vorteilhafterweise zwei Bürsten gleitend angeordnet sind. Die Steuerungsvorrichtung weist Mittel, insbesondere einen Schaltkreis, zur Messung einer durch die mechanische Kommutierung bedingten Welligkeit eines Antriebsstromes auf. Diese Mittel weisen vorzugsweise einen Messwiderstand, einen Analog-Digital-Umsetzer und eine Recheneinheit auf, wobei der Analog-Digital-Umsetzer und die Recheneinheit in einem Mikrocontroller integriert sein können. Dieser Antriebsstrom fließt dabei durch den mechanisch kommutierten Antriebsmotor. Dessen Welligkeit ist insbesondere von einem Wickelschritt vorhandener Motorspulen und von der Nutenanzahl des mechanisch kommutierten Antriebsmotors abhängig.

Weiterhin ist die Steuerungsvorrichtung zur Steuerung des Antriebsmotors in Abhängigkeit von der gemessenen Welligkeit ausgebildet. Vorteilhafterweise werden die Welligkeiten durch die Steuerungsvorrichtung gezählt und aus dieser Zählauswertung eine Verstellposition bestimmt. In Abhängigkeit von dieser Bestimmung wird der Antriebsstrom von der Steuerungsvorrichtung gesteuert, indem die Steuerungsvorrichtung vorzugsweise einen Leistungsschalter, beispielsweise ein Relais oder einen Leistungshalbleiter aufweist und diesen Leistungsschalter in Abhängigkeit von der Bestimmung der Verstellposition ansteuert.

Der mechanisch kommutierte Antriebsmotor weist eine Anzahl von Windungen einer Spule mit einem Wickelschritt auf, wobei der Wickelschritt berechnet ist, indem eine Nutenanzahl des mechanisch kommutierten Antriebsmotors halbiert ist, und von dem halbierten Wert der Wert zwei subtrahiert ist. Demzufolge ist

$$Wickelschritt = (Nutenanzahl / 2) -2$$

Die Anzahl von Windungen kann dabei eine Windung, vorteilhafterweise die Hälfte aller Windungen oder bevorzugt alle Windungen definieren. Dabei kann diese Anzahl von Windungen auf eine, mehrere oder vorteilhafterweise jede Spule bezogen sein. Der Wickelschritt gibt dabei eine Anzahl von durch die Spule umwickelten Polkernen an.

Es wird dabei von einem mechanisch kommutierten Antriebsmotor mit folgendem Aufbau ausgegangen. Ein Ankerstrom des Antriebsstromes verzweigt sich hinter der Bürste. Zwei Spulenseiten einer Schleifenwicklung werden durch Wickelköpfe außerhalb eines Ankerblechpakets miteinander verbunden und bilden somit eine Gesamtspule. Die Wickelköpfe tragen auf einer Kommutatorseite Verlängerungen (Fahnen), die in die voneinander isolierten Kommutatorlamellen beispielsweise eingelötet sind. Auf ihnen schleifen an Bürstenhaltern befestigte Kohlebürsten.

Eine Ausgestaltung sieht einen mechanisch kommutierten Antriebsmotor vor, der die Nutenanzahl zehn aufweist und wobei die Anzahl von Windungen den Wickelschritt drei aufweist.

Eine andere Lösung der erfindungsgemäßen Aufgabe sieht ein Verstellsystem eines Kraftfahrzeugs vor, das einen mechanisch kommutierten Antriebsmotor und eine Steuerungsvorrichtung aufweist. Die Steuerungsvorrichtung weist Mittel, insbesondere einen Schaltkreis, zur Messung einer durch die mechanische Kommutierung bedingten Welligkeit eines Antriebsstromes auf. Dieser Antriebsstrom fließt dabei durch den mechanisch kommutierten Antriebsmotor. Dessen Welligkeit ist insbesondere von einem Wickelschritt vorhandener Motorspulen und von der Nutenanzahl des mechanisch kommutierten Antriebsmotors abhängig.

Weiterhin ist die Steuerungsvorrichtung zur Steuerung des Antriebsmotors in Abhängigkeit von der gemessenen Welligkeit ausgebildet. Vorteilhafterweise werden die Welligkeiten durch die Steuerungsvorrichtung gezählt und aus dieser Zählauswertung eine Verstellposition bestimmt. Zusätzlich wird vorteilhafterweise die Welligkeit zeitlich erfasst und zur Bestimmung einer Geschwindigkeit ausgewertet, indem insbesondere der zeitliche Abstand zwischen zwei oder mehreren aufeinander folgenden Welligkeiten bestimmt wird. In Abhängigkeit von der Bestimmung der Position und/oder der Geschwindigkeit wird der Antriebsstrom von der Steuerungsvorrichtung gesteuert.

Eine Windung einer Spule des mechanisch kommutierten Antriebsmotors weist einen von zumindest einer weiteren Windung verschiedenen Wickelschritt auf. Die weitere Windung kann dabei Bestandteil derselben Spule oder einer weiteren Spule des mechanisch kommutierten Antriebsmotors sein. Insbesondere weist der mechanisch kommutierte Antriebsmotor eine Spule mit zumindest zwei Windungen mit einem unterschiedlichen Wickelschritt auf. Alternativ oder in Kombination kann der mechanisch kommutierte Antriebsmotors auch unterschiedliche Wickelschritte in verschiedenen Spulen aufweisen. Vorteilhafterweise sind dabei also zumindest zwei Spulen eines mechanisch kommutierten Motors über zwei unterschiedliche Wickelschritte geführt. Gemäß einer vorteilhaften Ausgestaltung weist jede Spule des Motors die zumindest zwei Windungen mit unterschiedlichem Wickelschritt auf.

In einer vorteilhaften Weiterbildung ist vorgesehen, dass die Windungen mit dem verschiedenen Wickelschritten ein charakteristisches Signal der Welligkeit bewirken, das einer Motorumdrehung oder einem Winkel der Motorumdrehung zugeordnet ist. Das charakteristische Signal kann beispielsweise ein signifikanter Amplitudenwert oder ein signifikanter Amplitudenverlauf der Welligkeit in Abhängigkeit vom Drehwinkel des Antriebsmotors sein.

In dieser Weiterbildung ist die Steuerungsvorrichtung zur Detektion des charakteristischen Signals und zur Korrektur einer Verstellposition und/oder einer Verstellgeschwindigkeit eines zu verstellenden Teils in Abhängigkeit von der Detektion ausgebildet ist. Die Korrektur kann dabei bevorzugt anhand einer Mustererkennung erfolgen, wobei die Position und/oder die Geschwindigkeit in Abhängigkeit von dem innerhalb der Welligkeit erkannten Muster korrigiert werden.

Eine weitere Lösung der erfindungsgemäßen Aufgabe ist ein Verstellsystem eines Kraftfahrzeugs mit einem mechanisch kommutierten Antriebsmotor und einer Steuerungsvorrichtung. Die Steuerungsvorrichtung weist Mittel, insbesondere einen Schaltkreis, zur Messung einer durch die mechanische Kommutierung bedingten Welligkeit eines Antriebsstromes auf. Dieser Antriebsstrom fließt dabei durch den mechanisch kommutierten Antriebsmotor. Dessen Welligkeit ist insbesondere von einem Wickelschritt vorhandener Motorspulen und von der Nutenanzahl des mechanisch kommutierten Antriebsmotors abhängig.

Weiterhin ist die Steuerungsvorrichtung zur Steuerung des Antriebsmotors in Abhängigkeit von der gemessenen Welligkeit ausgebildet. Vorteilhafterweise werden die Welligkeiten durch die Steuerungsvorrichtung gezählt und aus dieser Zählauswertung eine Verstellposition und/oder eine Verstellgeschwindigkeit bestimmt. In Abhängigkeit von dieser Bestimmung wird der Antriebsstrom von der Steuerungsvorrichtung gesteuert.

Der mechanisch kommutierte Antriebsmotor weist einen Läufer auf, dessen Nuten im Blechpaket geschränkt sind. Dabei ist ein Motoranker des mechanisch kommutierten Antriebsmotors zumindest bereichsweise bezüglich der Achse der Motorwelle schräg genutet. Dabei kann vorteilhafterweise die Schränkung auf einen axialen Bereich, insbesondere auf mindestens die Hälfte der Länge der Nuten beschränkt sein.

Die drei zuvor genannten Lösungen können in Weiterbildungen zur Erzielung einer charakteristischen Welligkeit zur Maximierung derer Amplitude bevorzugt untereinander kombiniert werden. Beispielsweise weist ein derartiger mechanisch kommutierter Antriebsmotor zehn Nuten auf, auf die Windungen von Spulen mit einem Wickelschritt von drei gewickelt sind. Zwei Windungen zweier bezüglich der Motorachse gegenüberliegenden Spulen weisen zusätzlich den Wickelschritt zwei auf. Die zehn Nuten des Läufers sind dabei schräg genutzt (geschränkt).

In einer vorteilhaften Ausgestaltung ist vorgesehen, dass der mechanisch kommutierte Antriebsmotor mit acht Nuten geschränkt ist und Spulen mit einem Wickelschritt drei aufweist. Beispielsweise weist jede Spule des mechanisch kommutierten Antriebsmotors eine Windungsanzahl von mindestens vierzehn auf.

Vorteilhafterweise ist die Steuerungsvorrichtung zur Bestimmung einer Position und/oder einer Verstellgeschwindigkeit eines zu verstellenden Teils in Abhängigkeit von der gemessenen Welligkeit eingerichtet. Zusätzlich ist bevorzugt vorgesehen, dass die Steuerungsvorrichtung zudem zur Detektion einer Kollision zwischen dem zu verstellenden Teil und einem Gegenstand oder einem Körperteil eingerichtet ist. Diese Kollisionsdetektion wird auch als Überschusskraftbegrenzung oder als Einklemmschutz bezeichnet.

Ein zuvor beschriebenes Verstellsystem eines Kraftfahrzeugs ist vorteilhafterweise zur Verstellung einer Fensterscheibe, eines Verstellteils eines Sitzes, einer Schwenktür, einer Schiebetür, eines Kofferraumdeckels oder einer Heckklappe ausgebildet.

Im Folgenden wird die Erfindung in Ausführungsbeispielen anhand zeichnerischer Darstellungen näher erläutert. Dabei zeigen

Fig. 1 eine Antriebsvorrichtung mit elektronischer Steuerungsvorrichtung für eine Verstelleinrichtung eines Kraftfahrzeugs,

Fig. 2 eine schematische Darstellung einer Abwicklung eines Elektromotors über 360°,

Fig. 3 eine schematische Draufsicht auf eine Stirnseite eines Läufers eines Stabankermotors mit drei Windungen einer Spule mit Wickelschritt drei,

Fig. 4    eine schematische Draufsicht auf eine Stirnseite eines Läufers eines Stabankermotors mit drei Windungen einer Spule mit Wickelschritt drei und zwei Windungen einer Spule mit Wickelschritt vier,

Fig. 5    einen Motoranker gerade genutet, und

Fig. 6    einen Motoranker schräg genutet.

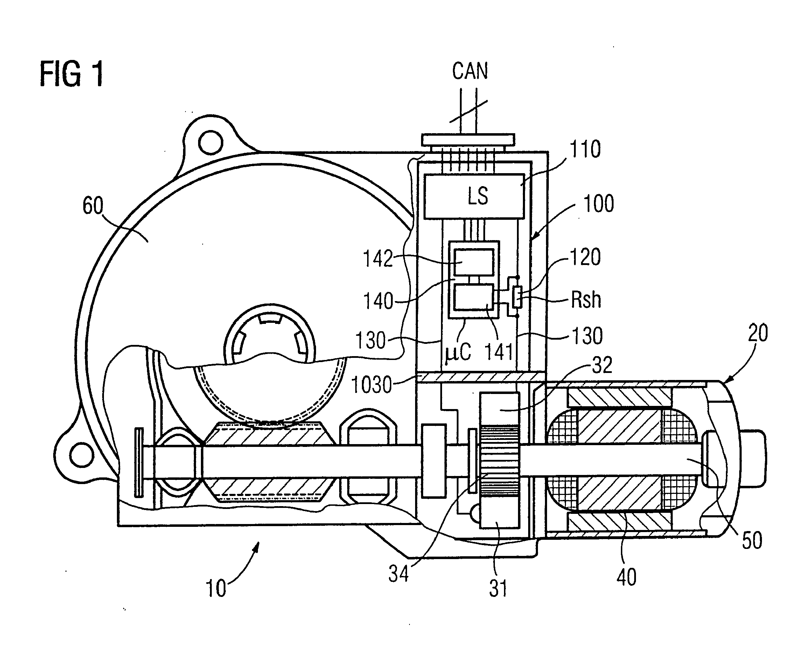

In Fig. 1 ist eine Antriebsvorrichtung 10 mit einem Stabankermotor 20 dargestellt, der über zwei Leitungen 130 mit einer Steuerungsvorrichtung 100 zur Steuerung einer Antriebsbewegung und zur Auswertung einer Antriebsbewegung des Stabankermotors 20 verbunden ist. Der Antrieb 10 des Ausführungsbeispiels der Fig. 1 weist zudem ein Getriebegehäuse 60 mit einem darin angeordneten Getriebe auf. Der Stabankermotor 20 weist ein schematisch dargestelltes Spulen-Blech-Packet 40 auf, das mit einer Motorwelle 50 fest verbunden ist. Der Stabankermotor 20 ist ein mechanisch kommutierter Elektromotor, der einen Kommutator 34 und zwei Bürsten 31 und 32 aufweist. Diese Bürsten können vorteilhafterweise als Hammerbürsten 31, 32 ausgebildet sein.
Die Bürsten 31 und 32 sind jeweils über eine elektrische Leitung 130 und über einen Stecker 1030 mit der Steuerungsvorrichtung 100 verbunden. Über diese elektrischen Leitungen 130 wird der Stabankermotor 20 zur Steuerung der Antriebsbewegung bestromt. Zum Steuern eines Antriebsstroms dient ein Leistungsschalter 110, der im Ausführungsbeispiel der Fig. 1 über einen Messwiderstand (Shunt-Widerstand Rsh) 120 mit den elektrischen Leitungen 130 verbunden ist. Der Leistungsschalter 110 ist beispielsweise ein Relais. Alternativ kann auch als Leistungsschalter 110 eine Leistungshalbleiterbrücke verwendet werden, so dass der Motorstrom auch durch ein pulsweiten-moduliertes Signal gesteuert werden kann.
Zur Steuerung ist der Leistungsschalter 110 mit einer Steuerelektronik 140 verbunden. Diese Steuerelektronik 140 ist vorteilhafterweise auf einem Halbleiterchip integriert. Diese kann beispielsweise als Mikrocontroller µC oder als anwendungsspezifischer Schaltkreis (ASIC) ausgebildet sein, in den eine Recheneinheit 142 und ein Analog-Digital-Umsetzer 141 integriert ist. Der Analog-Digital-Umsetzer 141 ist mit dem Messwiderstand (Shunt-Widerstand Rsh) 120 zur Messung der am Messwiderstand 120 abfallenden Spannung verbunden. Zusätzlich kann durch den dargestellten Analog-Digital-Umsetzer 141 oder einen weiteren Analog-Digital-Umsetzer die am Motor 20 anliegende Spannung ermittelt werden.
Die Steuerungsvorrichtung 100 ist dabei ausgebildet eine Welligkeit (engl. ripple) des Antriebsstromes zu ermitteln. Hierzu wird die am Messwiderstand 120 abfallende Spannung mit einer höheren Auflösung als die Frequenz der Welligkeit abgetastet. Die Welligkeit des Antriebsstroms korrespondiert dabei zur Kommutierung des Elektromotors 20, wobei eine Anzahl von Welligkeiten per Umdrehung der Welle 50 des Elektromotors 20 von einer Anzahl der Lamellen des Kommutators 34 abhängig ist. Insbesondere aus diesem physikalisch-technischen Zusammenhang ist daher eine Position und/oder Positionsveränderung und/oder eine Verstellgeschwindigkeit aus der Welligkeit des Antriebsstromes durch die Steuerungsvorrichtung 100 ermittelbar. In Abhängigkeit von der ermittelten Position und/oder der ermittelten Positionsveränderung und/oder der ermittelten Verstellgeschwindigkeit wird die durch den Elektromotor 20 bewirkte Antriebsbewegung des Antriebs 10 durch die Steuerungsvorrichtung 100 mittels des Leistungsschalters 110 gesteuert.
Die Steuer- und Messdaten sind über eine CAN-Busanbindung übertragbar. Auch kann die Steuerungsvorrichtung 100 über diese Schnittstelle CAN mess- oder steuerungsrelevante Parameter zur Programmierung empfangen. Beispielsweise können Informationen über einen konstruktiven Aufbau, insbesondere Wickelschritt, Nutenanzahl etc. über die CAN-Busanbindung übertragen werden.
Die Amplitude der Welligkeit ist dabei von konstruktiven und elektromagnetischen Eigenschaften des Elektromotors 20 abhängig. Der Elektromotor 20 ist für zumindest eine signifikante Amplitude der Welligkeit ausgelegt.

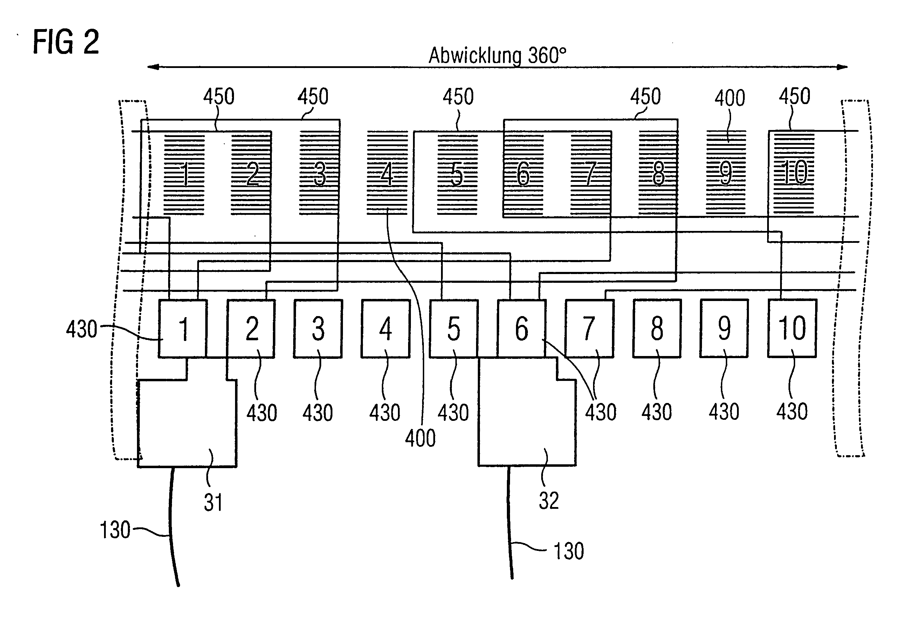

In Fig. 2 ist der Elektromotor 20 in einer Abwicklung von 360° schematisch dargestellt. Die zwei Bürsten 31 und 32 sind wiederum mit den Kabeln 130 zur Bestromung verbunden. Die beiden Bürsten gleiten dabei auf zehn (1 ... 10) Lamellen 430 des Kommutators 34. Je nach Drehstellung des Motors 20 sind dabei zwei Lamellen 430 durch eine der Bürsten 31, 32 kurzgeschlossen beziehungsweise nicht kurzgeschlossen. Durch den Wechsel zwischen kurzgeschlossenen und nicht-kurzgeschlossenen Lamellen 430 mit der Drehbewegung des Motors 20 werden zudem die mit den jeweiligen Lamellen elektrisch verbundenen Windungen 450 von Spulen mit kurzgeschlossen, beziehungsweise nichtkurzgeschlossen. Dies bewirkt einen Wechsel in der resultierenden Impedanz des Motors 20 in Abhängigkeit vom Drehwinkel des Motors 20. Die Amplitude der Welligkeit des Antriebsstromes ist wiederum von diesem Wechsel der Impedanz abhängig.
Im Ausführungsbeispiel der Fig. 2 wird ein zehn-nutiger Elektromotor 20 verwendet. Der Motor 20 weist dabei einen Wickelschritt von drei auf, da mit einer Spulenwindung 450 jeweils drei Eisenpolkerne 400 umwickelt sind. Aufgrund der geringen Anzahl drei von umwickelten Eisenpolkernen 400, ist die Amplitude der Welligkeit signifikant ausgeprägt. Zur vereinfachten Darstellung ist je Spule nur eine Windung 450 gezeigt. Zur Ausbildung eines Elektromotors 20 mit ausreichendem Moment ist jedoch eine der geforderten Motorleistung entsprechende Windungsanzahl erforderlich. Weiterhin sind zu Vereinfachung lediglich vier Spulen mit jeweils einer Windung 450 dargestellt.

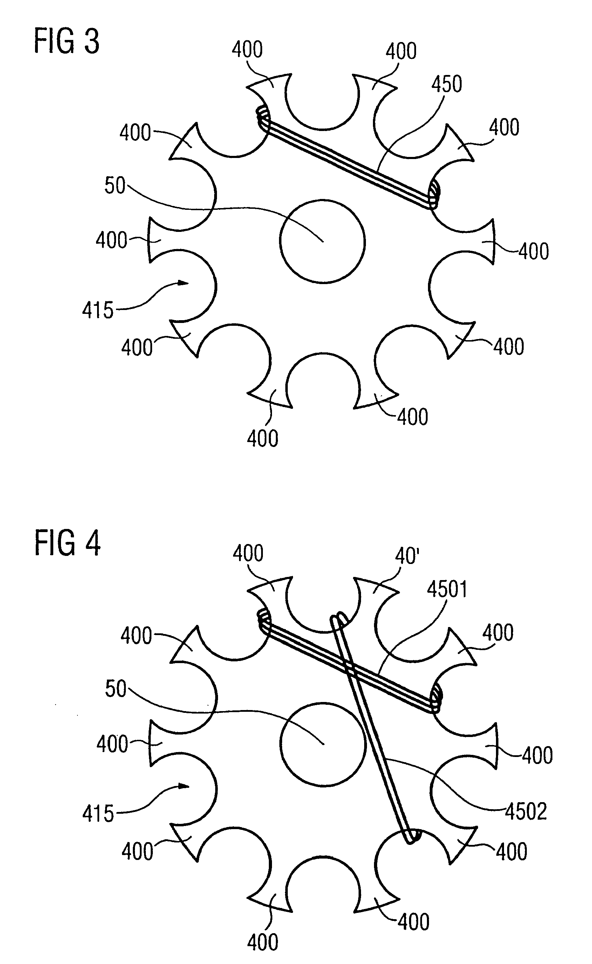

Fig. 3 zeigt eine schematische Draufsicht auf eine Stirnseite eines zehn-nutigen Motorankers mit zehn Eisenpolkernen 400, die auf der Motorwelle 50 befestigt sind. Weiterhin sind drei Windung 450 einer Spule dargestellt, die den Wickelschritt drei aufweisen.

In Fig. 4 ist ein weiteres Ausführungsbeispiel mit einer Draufsicht auf eine Stirnseite des Motorankers schematisch dargestellt. Drei Windungen 4501 einer Spule weisen einen Wickelschritt drei auf während zwei andere Windungen 4502 einer Spule den Wickelschritt vier aufweisen. Die drei Windungen 4501 und die zwei Windungen 4502 sind dabei Bestandteil einer oder zweier Spulen.

Diese Aufteilung in Windungen 4501, 4502 unterschiedlichen Wickelschrittes kann dabei für eine, mehrere oder für alle Spulen vorgesehen sein. Dieser Unterschied im Wickelschritt bewirkt dabei ein Charakteristikum in der Welligkeit des Antriebsstromes, das von der Steuervorrichtung 100 auswertbar ist. Selbstverständlich ist entgegen den Darstellungen in den Figuren 3 und 4 eine Vielzahl von Wicklungen erforderlich, die lediglich aus Gründen einer besseren Übersichtlichkeit in den Figuren 3 und 4 nicht dargestellt sind.

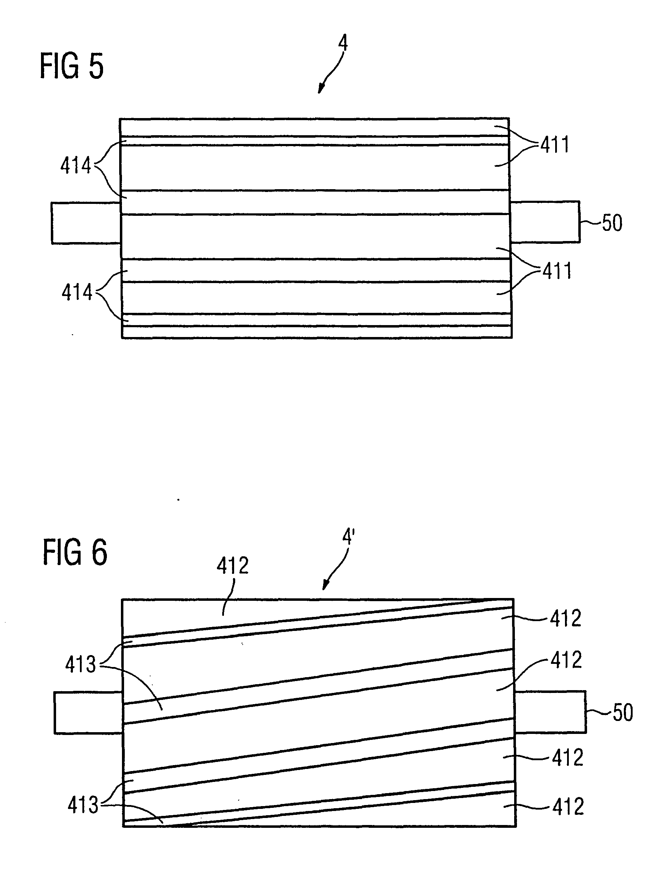

In Fig. 5 ist ein Läufer 4 des Elektromotors 20 mit gerader Nutung des Blechpaketes zur Aufnahme der Spulen schematisch dargestellt. Auf der Motorwelle 50 sind Eisenpolkerne 411 befestigt. Die um die Eisenpolkerne 411 gewickelten Spulen, die in den Nuten 414 angeordnet werden, sind in Fig. 5 nicht dargestellt. In Fig. 5 sind die Eisenpolkerne 411 parallel zur Motorwelle 50 angeordnet. Der Motoranker ist damit gerade genutet.

Eine weitere Ausgestaltungsvariante, um den Elektromotor 20 zur Ausbildung einer signifikanten Welligkeitsamplitude anzupassen, ist in Fig. 6 schematisch als Läufer 4' dargestellt. In Fig. 6 sind die Nuten 413 des Blechpakets zur Aufnahme der Spulen geschränkt. Die Eisenpolkerne 412 sind wiederum auf der Welle 50 befestigt. Die dargestellte Schränkung bewirkt dabei eine Reduktion einer Momentenwelligkeit des Elektromotors.

Es kann das Moment M($\alpha$) einer Spule definiert werden zu:

$$M_{(\alpha)} = w \cdot L_m \cdot R_A \cdot I(Bn(\alpha + s) - Bn(\alpha))$$

mit

M($\alpha$) als Momentbeitrag der jeweiligen Spule des Motors abhängig vom Winkel $\alpha$,
$\alpha$ als Winkel zwischen Magnetfeld des Motors und der jeweils betrachteten Spule des Motors,
w als eine Windungsanzahl einer jeweiligen Spule,
$L_m$ als eine Leiterlänge einer jeweiligen Spule,
$R_A$ als ein Spulenradius,
Bn als Normal-Induktion,
I als Spulenstrom,
s als Winkel des Wickelschrittes.

Die Induktionsspannung e($\alpha$) einer Spule (SPi) kann sich daher ergeben zu:

$$e(\alpha)_{SPi} = -w \cdot L_m \cdot v(Bn(\alpha + s) - Bn(\alpha))$$

mit

e($\alpha$) als Induktionsspannung für jede Spule (SPi) und
v als Drehgeschwindigkeit des Motors.

Demzufolge ist sowohl das Moment M($\alpha$) als auch die Induktionsspannung e($\alpha$) von dem Winkel des Wickelschrittes S abhängig. Für einen Wickelschritt von 3 beträgt der Winkel des Wickelschrittes beispielsweise 108°, während für den Wickelschritt 4 der Winkel des Wickelschrittes 144° beträgt.

Nicht berücksichtigt sind dabei Geometrien des Kommutators, also die Breite der jeweiligen Bürste, deren Position zueinander, als auch die Form und der Abstand der Lamellen des Kommutators, die je nach Drehwinkel einen Einfluss auf die Induktionsspannung und das Moment haben. Dieser Einfluss kann sich dabei über die Lebenszeit des Motors zudem ändern. Unter Berücksichtigung dieser Vereinfachung kann damit der Strom, der sowohl den Gleichanteil als auch die Welligkeit umfasst, angegeben werden zu:

$$I_{Ges}(\alpha) = \frac{U_{Kl} - \sum e_{SPi}(\alpha)}{Ri(\alpha)}$$

mit

I$_{Ges}(\alpha)$ als momentaner Stromfluss durch den Motor,
U$_{kl}$ als einer an dem Motor anliegenen Klemmenspannung und
Ri$(\alpha)$ als ohmscher Innenwiderstand des Motors.

Dabei sind je nach Kommutatorstellung eine unterschiedliche Anzahl von Spulen in Reihe geschaltet. Zwei dieser Reihenschaltungen der Spulen sind dabei zueinander parallel geschaltet. Zwei Lamellen des Kommutators können je nach Winkelstellung gemeinsam durch eine Bürste kurzgeschlossen sein. Der Wechsel zwischen diesem Kurzschluss der zwei Lamellen und dem Nicht-Kurzschluss in Abhängigkeit von dem Drehwinkel des Kommutators kann zu der Welligkeit des Antriebsstromes I$_{Ges}$ führen, wobei die Welligkeit zudem - wie beschrieben - noch von dem Wickelschritt und weiteren konstruktiven Parametern des Motors abhängig ist.

Bezugszeichenliste

| | |
|---|---|
| 10 | Antrieb |
| 20 | Antriebsmotor, Stabankermotor |
| 31, 32 | Bürste |
| 34 | Kommutator |
| 4, 4' | Läufer |
| 400, 411, 412 | Polkern, Eisenpolkern |
| 413, 414, 415 | Nut |
| 430 | Kommutatorlamellen |
| 40 | Spulen-Blech-Paket |
| 450, 4501, 4502 | Windung |
| 50 | Motorwelle |
| 60 | Getriebegehäuse |
| 130 | Leitungsverbindung, Kabel |
| 1030 | Steckverbindung |
| 100 | Steuerungsvorrichtung, Elektronik |
| 110, LS | Leistungsschalter, Relais, Leistungshalbleiter |
| 120, Rsh | Messwiderstand, Shunt-Widerstand |
| 140, μC | Mikrocontroller, anwendungsspezifischer integrierter Schaltkreis |
| 141 | Analog-Digital-Umsetzer |
| 142 | Recheneinheit, CPU, ALU |
| CAN | CAN-Busanbindung |

**Patentansprüche**

1.  Verstellsystem eines Kraftfahrzeugs

    - mit einem mechanisch kommutierten Antriebsmotor (20) und
    - mit einer Steuerungsvorrichtung (100), bei dem
    - die Steuerungsvorrichtung (100) Mittel (120, 140) zur Messung einer, durch die mechanische Kommutierung bedingten Welligkeit eines, durch den mechanisch kommutierten Antriebsmotor (20) fließenden Antriebsstromes aufweist,
    - die Steuerungsvorrichtung (100) zur Steuerung des Antriebsmotors (20) in Abhängigkeit von der gemessenen Welligkeit ausgebildet ist, und
    - eine Anzahl von Windungen (450) einer Spule des mechanisch kommutierten Antriebsmotors (20) einen Wickelschritt aufweist, der einer Hälfte einer Nutenzahl des mechanisch kommutierten Antriebsmotors (20) um zwei verringert entspricht.

**2.** Verstellsystem eines Kraftfahrzeugs nach Anspruch 1, bei dem der mechanisch kommutierte Antriebsmotor (20) die Nutenzahl zehn und die Anzahl von Windungen (450) den Wickelschritt drei aufweisen.

**3.** Verstellsystem eines Kraftfahrzeugs, insbesondere nach einem der vorhergehenden Ansprüche, mit

- einem mechanisch kommutierten Antriebsmotor (20) und
- einer Steuerungsvorrichtung (100), bei dem
- die Steuerungsvorrichtung (100) Mittel (120, 140) zur Messung einer durch die mechanische Kommutierung bedingten Welligkeit eines Antriebsstromes durch den mechanisch kommutierten Antriebsmotor (20) aufweist,
- die Steuerungsvorrichtung (100) zur Steuerung des Antriebsmotors (20) in Abhängigkeit von der gemessenen Welligkeit ausgebildet ist, und
- eine Windung (4501) einer Spule (450) des mechanisch kommutierten Antriebsmotors (20) einen von zumindest einer weiteren Windung (4502) verschiedenen Wickelschritt aufweist.

**4.** Verstellsystem eines Kraftfahrzeugs nach Anspruch 3, bei dem zumindest zwei Spulen des Antriebsmotors (20) zumindest die Windung (4501) und die weitere Windung (4502) mit unterschiedlichem Wickelschritt aufinreisen.

**5.** Verstellsystem eines Kraftfahrzeugs zumindest nach Anspruch 3, bei dem die Windungen (4501, 4502) mit den verschiedenen Wickelschritten ein charakteristisches Signal der Welligkeit bewirken, das einer Motorumdrehung oder einem Winkel der Motorumdrehung zugeordnet ist, und
bei dem die Steuerungsvorrichtung (100) zur Detektion des charakteristischen Signals und zur Korrektur einer Verstellposition und/oder einer Verstellgeschwindigkeit eines zu verstellenden Teils in Abhängigkeit von der Detektion ausgebildet ist.

**6.** Verstellsystem eines Kraftfahrzeugs nach Anspruch 5, bei dem die Steuerungsvorrichtung (100) zu einer Mustererkennung des charakteristischen Signals innerhalb der Welligkeit eingerichtet ist.

**7.** Verstellsystem eines Kraftfahrzeugs, insbesondere nach einem der vorhergehenden Ansprüche, mit

- einem mechanisch kommutierten Antriebsmotor (20) und
- einer Steuerungsvorrichtung (100), bei dem
- die Steuerungsvorrichtung (100) Mittel (120, 140) zur Messung einer durch die mechanische Kommutierung bedingten Welligkeit eines Antriebsstromes durch den mechanisch kommutierten Antriebsmotor (20) aufweist,
- die Steuerungsvorrichtung (100) zur Steuerung des Antriebsmotors (20) in Abhängigkeit von der gemessenen Welligkeit ausgebildet ist, und
- Nuten (413) eines Läufers (4') des mechanisch kommutierten Antriebsmotors (20) geschränkt sind.

**8.** Verstellsystem eines Kraftfahrzeugs nach Anspruch 7, bei dem der mechanisch kommutierte Antriebsmotor (20) acht Nuten (413) und Spulen mit einem Wickelschritt drei aufweist.

**9.** Verstellsystem eines Kraftfahrzeugs nach einem der Ansprüche 7 oder 8, bei dem die Schränkung der Nuten (413) auf einen axialen Bereich, insbesondere auf mindestens die Hälfte der Länge der Nuten (413) beschränkt ist.

**10.** Verstellsystem eines Kraftfahrzeugs nach einem der vorhergehenden Ansprüche, bei dem die Steuerungsvorrichtung (100) zur Bestimmung einer Position und/oder einer Geschwindigkeit eines zu verstellenden Teils in Abhängigkeit von der gemessenen Welligkeit eingerichtet ist.

**11.** Verwendung eines Verstellsystems eines Kraftfahrzeugs nach einem der vorhergehenden Ansprüche, zur Verstellung einer Fensterscheibe, eines Verstellteils eines Sitzes, einer Schwenktür, einer Schiebetür, eines Kofferaumdeckels oder einer Heckklappe.

FIG 1

FIG 2

FIG 3

FIG 4

FIG 5

FIG 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0689054 A1
- EP 0730156 A1
- DE 3935585 A1
- DE 3527906 A1